Europäisches Patentamt

European Patent Office

Office européen des brevets

(11) Publication number: **0 670 452 A1**

# EUROPEAN PATENT APPLICATION

(21) Application number: **94103062.9**

(22) Date of filing: **01.03.94**

(51) Int. Cl.⁶: **F17C 1/00**, F17C 1/12, F17C 7/00, F17C 5/06

(43) Date of publication of application:
**06.09.95 Bulletin 95/36**

(84) Designated Contracting States:
**AT DE ES FR GB IT SE**

(71) Applicant: **AEROSPACE DESIGN & DEVELOPMENT, INC.**
**4871 Earle Circle**
**Boulder,**
**Colorado 80301 (US)**

(72) Inventor: **Gier, Harold L.**
**4871 Earle Circle**
**Boulder,**
**Colorado 80301 (US)**
Inventor: **Jetley, Richard L.**
**4878 Hopkins Place**
**Boulder,**
**Colorado 80301 (US)**

(74) Representative: **Baillie, Iain Cameron et al**
**c/o Ladas & Parry**
**Altheimer Eck 2**
**D-80331 München (DE)**

(54) Loading, storage and delivery apparatus and method for fluid at cryogenic temperature.

(57) An fluid storage and delivery apparatus and method, fluid loading apparatus and method, and a fluid supply carriage and conditioning unit are disclosed, the storage apparatus including a compact and lightweight dewar having a pressure vessel and outer shell for containing cryogenic temperature mixed gas at supercritical pressure. A passive heat exchanger receiving the mixed gas expelled from the pressure vessel for conducting the gas to a use destination is routed for mass flow transfer of heat from the surface of the outer shell, which preferably is fitted with means to increase the surface area thereof such as fins, to the pressure vessel, heat transfer accomplished thereby being sufficient to maintain the gas in a single phase in the dewar and provide the necessary energy to expel the gas therefrom.

## Field of the Invention

This invention relates to fluid storage and delivery apparatus and methods, and, more particularly, relates to loading, storage and delivery of mixed gas stored at cryogenic temperatures and delivered in a usable condition.

## Background of the Invention

High pressure, ambient temperature gas storage and delivery devices have been heretofore suggested for providing attitude independent supply of mixed gasses such as breathable air to a user thereof. Such devices, while in use, have limited gas delivery time, are bulky, and must be operated at extremely high pressures.

Liquid air storage and delivery devices have also been suggested (see U.S. Patent Nos. 1,448,590, 3,318,307, 3,570,481, 3,572,048, 4,181,126, 3,699,775, 1,459,158, and 3,227,208), but suffer from limited stand-by time due to oxygen enrichment inherent in such storage, some being unduly complex in an effort to confront this problem, are not attitude independent, and are often quite heavy.

A dispenser for cryogenic temperature elemental and compound gasses (below -100 C (-175°F.)) such as oxygen held for use at supercritical pressure (above 5.03 MPa (730 psia)) has been heretofore suggested (see U.S. Patent No. 3,062,017) wherein a primary, active heat transfer mechanism (i.e., an electrical heating element, as opposed to a passive heat exchanger as set forth hereinbelow) is utilized to pressurize the storage vessel having liquid oxygen loaded therein at atmospheric pressure (thus making the dispenser less than desirable as an air supply, where oxygen enrichment could occur while liquid air is in standby storage) for expelling the oxygen.

Pressure sensing is thereafter used to sense the heat transfer needs in the vessel to maintain pressure therein above critical pressure by activating the heating element periodically. An auxiliary passive heat exchanger is provided for situations where power becomes unavailable, but only for use in maintaining pressure, the passive system being, apparently, incapable of reasonably initiating vessel pressurization. The passive heat exchange is done utilizing means separate from the dewar and remains encumbered by complex sensing and activating mechanisms (blinds for admitting or shutting out radiant energy) to assure proper heat input. Improvement in such dispensers could thus still be utilized.

## Summary of the Invention

This invention provides a fluid storage apparatus and method, an apparatus for loading cryogenic temperature fluid into a container at supercritical pressure, and a fluid supply carriage and conditioning unit for use with a fluid storage device having single phase, cryogenic temperature fluid therein. The fluid storage apparatus and method of this invention provide for loading of a container with fluid at cryogenic temperature and supercritical pressure.

More particularly, this invention provides a storage and delivery apparatus and method for mixed gasses at cryogenic temperature wherein the gasses are maintained in a single phase (i.e., in a homogeneous state such that the mixture remains substantially constant in the apparatus and is distinguished by a lack of two-phase liquid/vapor interface).

The storage and delivery apparatus and method provide for long fluid delivery, storage and standby time, delivery of fluid such as mixed gas independent of ambient conditions and apparatus attitude, avoidance of oxygen enrichment during standby in the case of air storage, and passive heat transfer for substantially all fluid storage maintenance and delivery needs of the system. The apparatus is compact and light weight and capable of fluid storage at reasonably high densities thus providing the long delivery time.

The fluid storage and delivery apparatus includes a container for receiving fluid at cryogenic temperature and in an amount so that the fluid is initially at a pressure sufficient to maintain the fluid in a single phase, an outlet connected with the container for selective expulsion of the fluid from the container therethrough, and a passive heat exchanger connected with the outlet for receiving the expelled fluid at the outlet and conducting the expelled fluid to a destination, the heat exchanger being routed for introducing heat into the container at a rate determined by a rate of expulsion of the fluid from the container through the outlet so that the fluid remaining in the container remains in the single phase. The heat exchanger is substantially the only means for input of heat into the container for maintaining the fluid in the single phase and for maintaining sufficient energy to expel the fluid from the container, and is routed to deliver sufficient heat thereto so that overall an expulsion energy of between about 81.4 and 407.1 J/gm (35 and 175 BTU/Lbm) is maintained.

An outer shell, or vacuum jacket, surrounds the container (a pressure vessel), with the heat exchanger functioning as a mass flow heat exchanger for transferring heat from the surface of the outer shell, which preferably is fitted with means to increase the surface area thereof such as fins, to the pressure vessel.

The apparatus for loading cryogenic temperature fluid into a container at supercritical pressure and thus in a single phase in the container includes a source of fluid at supercritical pressure, a conduit connected with the source for conducting the fluid to the container, and a heat exchanger receiving the conduit for lowering the temperature of the fluid to cryogenic temperature.

It is therefore an object of this invention to provide a fluid storage and delivery apparatus and method which provides long fluid delivery and stand-by time, which delivers fluid independent of ambient conditions and apparatus attitude, which in the case of air avoids oxygen enrichment during storage and standby, and which relies substantially entirely on passive heat transfer for fluid storage maintenance and fluid delivery.

It is another object of this invention to provide a fluid storage and delivery apparatus which is compact, light weight and capable of fluid storage at reasonably high densities thus providing long fluid delivery time.

It is still another object of this invention to provide a storage and delivery apparatus and method for storing mixed gasses at cryogenic temperature wherein the gasses are maintained in a single phase.

It is yet another object of this invention to provide a fluid storage and delivery apparatus comprising a container for receiving fluid at cryogenic temperature and in an amount so that the fluid is initially at a pressure sufficient to maintain the fluid in a single phase, an outlet connected with the container for selective expulsion of the fluid from the container therethrough, and a passive heat exchanger connected with the outlet for receiving the expelled fluid at the outlet and conducting the expelled fluid to a destination, the heat exchanger being routed for introducing heat into the container at a rate determined by a rate of expulsion of the fluid from the container through the outlet so that the fluid remaining in the container remains in the single phase.

It is still another object of this invention to provide a mixed gas storage and delivery apparatus comprising a pressure vessel for containing mixed gas at cryogenic temperature and at a pressure so that the mixed gas is in a single phase, the vessel having an inlet and an outlet, an outer shell having the pressure vessel therein, structure for increasing the surface area of the outer shell, and a mass flow heat exchanger connected adjacent to the outer shell and with the outlet of the pressure vessel for receiving the mixed gas from the pressure vessel through the outlet and conducting the mixed gas to a destination, the heat exchanger being routed for introducing heat by free convection into the mixed gas being conducted to a destination and into the pressure vessel from the mixed gas thus routed at a rate determined by rate of expulsion of the mixed gas from the pressure vessel through the outlet to thereby maintain sufficient energy in the pressure vessel to expel the mixed gas therefrom.

It is yet another object of this invention to provide a method for storing and delivering mixed gas comprising the steps of loading cryogenic temperature mixed gas into a container so that the mixed gas at time of use is in a single phase, selectively expelling the mixed gas from the container, and routing the expelled mixed gas to deliver sufficient heat to the container so that mixed gas remaining in the container remains in the single phase.

It is still another object of this invention to provide an apparatus for loading cryogenic temperature fluid into a container at supercritical pressure and thus in a single phase in the container comprising a source of fluid at supercritical pressure, a conduit connected with the source for conducting the fluid to the container, and a heat exchanger receiving the conduit for lowering the temperature of the fluid to cryogenic temperature.

It is yet another object of this invention to provide a fluid supply carriage and conditioning unit for use with a fluid storage device having single phase, cryogenic temperature fluid therein.

With these and other objects in view, which will become apparent to one skilled in the art as the description proceeds, this invention resides in the novel construction, combination, arrangement of parts and method substantially as hereinafter described, and more particularly defined by the appended claims, it being understood that changes in the precise embodiment of the herein disclosed invention are meant to be included as come within the scope of the claims.

Brief Description of the Drawings

The accompanying drawings illustrate a complete embodiment of the invention according to the best mode so far devised for the practical application of the principles thereof, and in which:

FIGURE 1 is a perspective view of the storage and delivery apparatus of this invention;

FIGURE 2 is a schematic diagram of the apparatus of FIGURE 1;

FIGURE 3 is a diagrammatic illustration of heat exchange in the apparatus of FIGURE 1;

FIGURE 4 is a diagrammatic sectional illustration of the storage and delivery apparatus of this invention;

FIGURE 5 is a is a side view of the outer routed portion of the heat exchanger of the storage and delivery apparatus of this invention;

FIGURE 6 is a sectional view illustrating part of the inner routed portion of the heat exchanger of the storage and delivery apparatus of this invention;

FIGURE 7 is a sectional view taken through section line 7-7 of FIGURE 6;

FIGURE 8 is a Mollier chart showing performance of the apparatus of this invention under a variety of loading densities;

FIGURE 9 is a perspective view of the loading apparatus of this invention;

FIGURE 10 is a schematic sectional view of the loading apparatus of FIGURE 9;

FIGURE 11 is a diagram illustrating operation of the loading apparatus of FIGURE 9;

FIGURE 12 is a rear view of the carriage and conditioning unit of this invention;

FIGURE 13 is a side view of the unit of FIGURE 12;

FIGURE 14 is a schematic sectional view of the unit of FIGURE 12; and

FIGURE 15 is a partial schematic sectional view of the unit of FIGURE 12.

## Description of the Invention

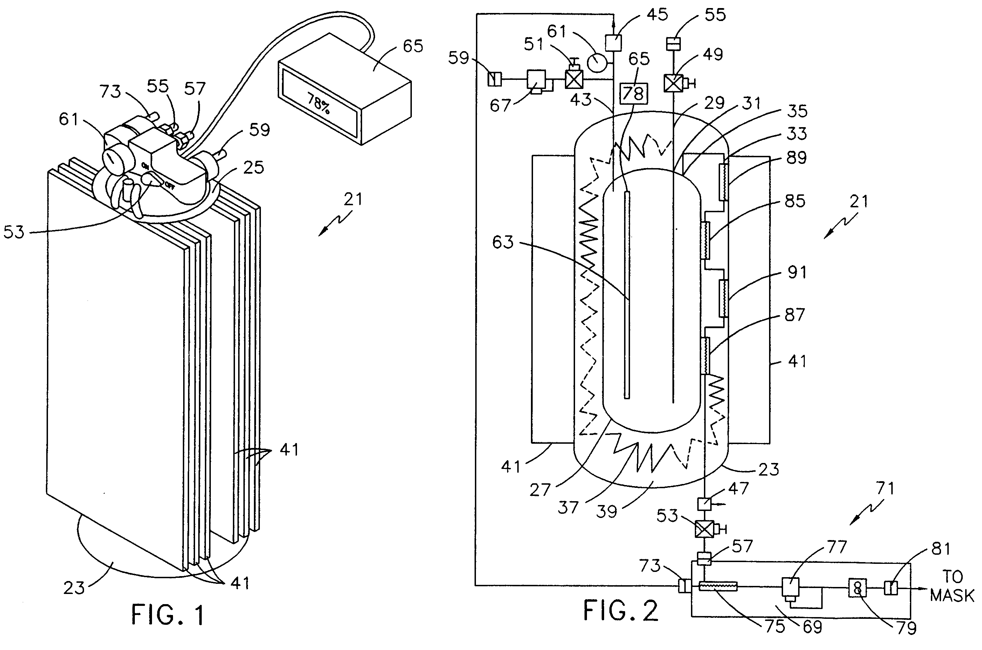

Storage and delivery apparatus 21 of this invention is shown in FIGURE 1 for containing supercritical pressure cryogenic air as a breathing supply to thus obviate the problems of oxygen enrichment and attitude dependence of a liquid air breathing bottle. The use of a supercritical cryogenic fluid state for the air provides a gas which is in a single phase, high density condition and which can be withdrawn from any location in the apparatus which may itself be in any attitude. Supercritical pressure is required so that the air at cryogenic temperature will exhibit no two phase characteristics.

While an air delivery apparatus will be described and referred to herein, it should be understood that the apparatus could as well be utilized for any fluid such as elemental and/or compound gasses, or, most particularly, mixed gasses such as air (nitrogen-oxygen), helium-oxygen, argon-oxygen, helium-argon, methane-hydrogen, or the like where prevention of separation of the components due to gravitational effects and/or due to frictional separation from boiling of a liquid is desired.

The critical pressure for air is 3.77 MPa (37.25 atm. or 547.37 psia) and the critical temperature is 132.5 K (238.54° R). The colder the initial temperature of the air (preferably down to 77.8 K (140° R)) and to a much lesser extent the higher the pressure (preferably in a range between 5.17 MPa (750 psia) and 13.8 MPa (2,000 psia)), the greater will be the storage density and thus the ability to provide significant rated use times while utilizing smaller, lighter storage units.

The use of supercritical fluid also provides a standby storage advantage over liquid in that energy required to expel a pound of fluid in the single phase storage condition is greater than that required to boil-off a pound of liquid and expel the vapor (376 J/gm (161.68 Btu/Lbm) at 5.17 MPa (750 psia) versus 201.6 J/gm (86.67 Btu/Lbm) at one atmosphere, respectively). Supercritical air may thus be stored for longer times before reservicing than liquid air.

As shown in FIGURES 1 and/or 2, apparatus 21 includes outer shell, or vacuum jacket, 23, protective head 25 (for example, a one-piece cast aluminum head) sealed to shell 23 and pressure vessel 27 within shell 23 for containing the air. Fill line 29 passes through shell 23 and vessel 27 at inlet 31 for filling and/or refilling as hereinafter set forth (all connections and passages with, to and from vessel 27 and shell 23 set forth herein being formed by means known to those skilled in the pertinent art). Passive heat exchange and fluid transport system 33 is connected to vessel 27 at outlet 35 for conducting air expelled from vessel 27 to a use destination (for example to the carriage and conditioning unit hereinafter described).

Insulation 37 fills, and is vacuum jacketed within, space 39 between vessel 27 and shell 23 and can be, for example, formed of ten layers of multi-layered insulation consisting of double aluminized MYLAR spaced with tissue glass or polyester netting. Fins 41 (in one embodiment being about four inches wide by .21 cm (0.083 inch) thick aluminum fins) are welded to, or formed integrally with (though they could also be remote from the shell), shell 23 for effectively increasing the surface area of the shell exposed to ambient temperature air to enhance heat exchange as discussed in more detail hereinbelow.

Vent line 43 is connected with vessel 27 for relief venting through relief valve 45 and to maintain pressure during standby and during filling. Relief valve 45 should include a TEFLON seal and be rated for cryogenic temperatures, and as illustrated is preferably biased at atmospheric pressure for relieving top pressure and thus reducing pressure through transport system 33 without waste of fluid. Relief valve 47 is employed as a final high reliability safety device, and should be sized to relieve at approximately 10% (approximately 1.38 MPa (200 psi)) above relief pressure of valve 45.

Flow control valves 49, 51 and 53 are manual valves for control of filling, draining and use of apparatus 21, and may be bellows type valves of all welded construction designed for temperature cycling applications, and/or may be combined into one or more operational units. Quick disconnects 55, 57, and 59 are provided for making required connections to a loading apparatus (for example, as hereinafter described) or carriage and conditioning unit.

Pressure gauge 61, for example a small bourdon tube pressure gauge, is used for checking tank pressure, and quantity sensor 63 having readout 65 monitors fluid quantity in vessel 27 (for example, using a capacitance probe to measure the dielectric constant which varies from approximately 1.4 in the full condition to 1.0 in the empty condition). An audible alarm can be provided to alert a user when the fluid quantity reaches a selected low level, all electronics being powered, for example, by a 9 volt battery.

Pressure regulator 67 is a back-pressure regulator used, in conjunction with valve 51, to maintain pressure during standby and filling operations. As shown in FIGURE 2, line 43 may be couplable through valve 45 with conditioning unit 69 at carriage and conditioning unit 71 using quick disconnect 73 so that air expelled therethrough may be used in the system.

Conditioning unit 69 includes heat exchanger 75 for heating expelled air to a breathable temperature, pressure regulator 77, optional flowmeter 79 and quick disconnect 81 for connection with a utilization device such as a mask.

Configuration of the various components varies with operation. During storage, valves 49 and 53 and quick disconnects 55, 57 and 81 are all closed. During loading operations valves 49 and 51, quick disconnects 55 and 59 and pressure regulator 67 are operational. During standby, valve 51, quick disconnect 59 and pressure regulator 67 remain open, while in operation valve 51, quick disconnect 59 and pressure regulator 67 are closed, and valve 53 is opened.

Vessel 27, in one particularly useful embodiment, has a volume of less than 4.2 liters (preferably about 4 liters), the apparatus having an overall diameter of about 21.7 cm (five inches), length of about 55.9 cm (22 inches), operating pressure of 11.03 MPa (1,600 psia), and weight empty of about 4.85 kg (10.7 pounds) (filled weight of about 8.62 kg (19 pounds)) for a rated delivery time of about one hour ("rated delivery" herein refers to NIOSH rating of 40 SLM for breathing apparatus, equating to about 3.04 kg (6.7 lbs.) of air per hour of delivery). In such case, vessel 27 is made of titanium, though other materials could be used.

By way of further example, for a rated time of two hours at the same operating pressure, the apparatus having a titanium vessel 27 weighs under 13.6 kg (30 pounds) filled, has a vessel volume of about 7.2 liters, a diameter of 16.5 cm (6.5 inches) and a length of about 63.5 cm (25 inches).

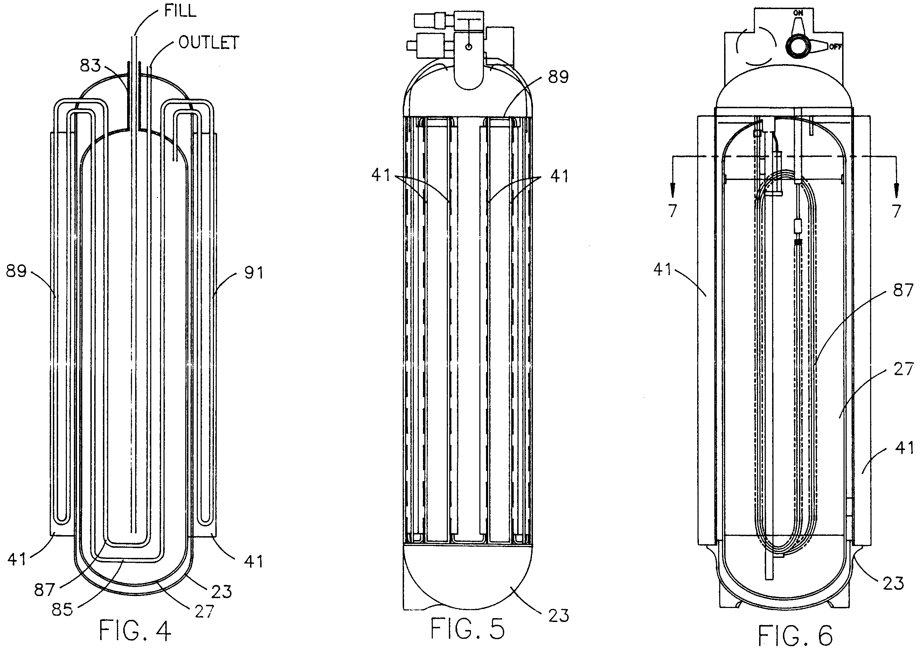

Apparatus weight depends on vessel 27 volume, operating pressure and materials. Pressure vessel and outer shell materials could include composites such as FIBERGLASS, KEVLAR or graphite. Metals that could be used include stainless steel, aluminum, INCONEL or titanium. Aluminum or composite pressure vessels would require bimetal joints, with a composite vessel 27 possibly including an aluminum liner and neck plug 83 (shown in FIGURE 4 for housing inlet and outlet plumbing and for, in part, positioning vessel 27 in shell 23) overlaid with an S-glass/epoxy composite. The advantage in weight of such construction is significant, with a 4 liter apparatus (rated use exceeding 60 minutes) having a diameter of 11.4 cm (4.5 inches) and a vessel weight of less than 1.8 kg (four pounds). Overall, weights for a 4 liter apparatus range from about 4.85 to 7.44 kg (10.7 to 16.4 pounds) at an operating pressure of 11.03 MPa (1,600 psig), the lightest having a titanium, INCONEL 718 or aluminum (6061-T6 welded and heat treated with a burst pressure in excess of 41.4 MPa (6,000 psig)) vessel 27 with an aluminum shell 23.

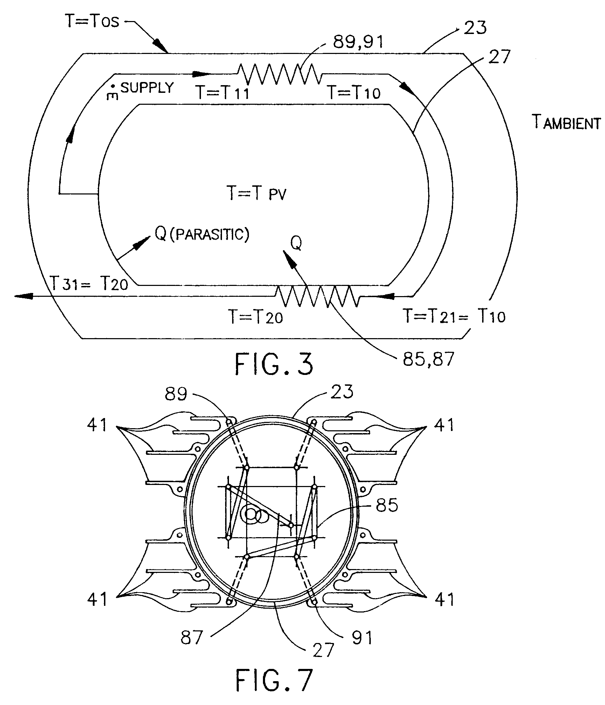

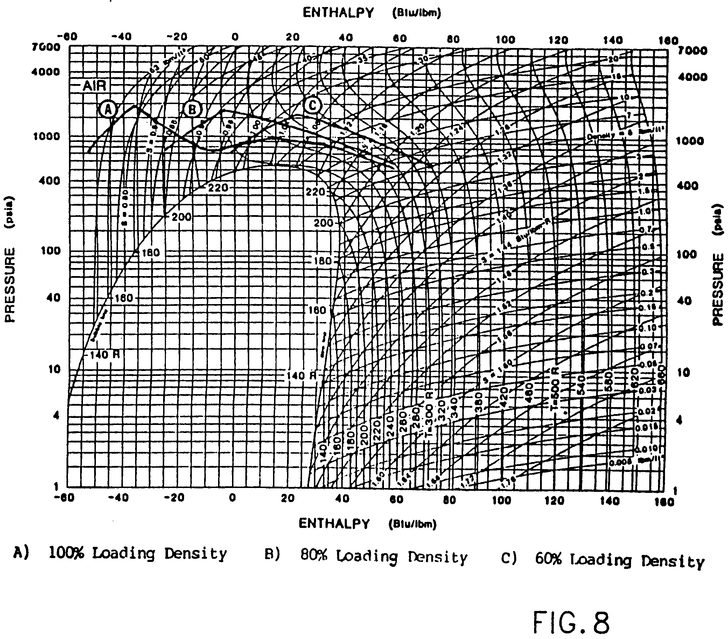

Referring now to FIGURES 2 and 3, passive heat exchange system 33 is a double loop heat exchange system (a single loop system could be used) including inner exchange loop portions 85 and 87 connected either to the outer part of vessel 27 or passing into vessel 27 in direct contact with fluid therein. Outer exchange loop portions 89 and 91 are connected with shell 23 or fins 41 or could be made integral to fins 41 as shown in FIGURE 7. The heat exchange loop portions are preferably constructed of 0.32 cm (1/8") diameter aluminum tubing, though other materials could be utilized.

Sufficient heat must be efficiently transported from outer shell 23 to pressure vessel 27 to maintain the gas in the vessel in the single phase and to provide expulsion energy for delivery of the gas from the vessel. A design to provide adequate heat transfer for expulsion must recognize that the process is a transient one. Fluid conditions and properties constantly change throughout the entire expulsion process.

For example, the expulsion energy for supercritical air ranges from approximately 81.4 to 372 J/gm (35 BTU/Lbm to 160 BTU/Lbm) in the pressure and temperature range of interest, with the integrated average expulsion energy being approximately 151 J/gm (65 BTU/Lbm). Since heat leak through plumbing and other fixtures alone is insignificant compared to that required to expel the air needed (only about 2.64 W (9.0 BTU/Hr) for a shell temperature of 294.4 K (530°R) and a vessel temperature of 100 K (180°R)) for use by an individual user at maximum exertion (estimated to be about 7.26 kg/hr (16.0 lbm/hr)), mass flow heat exchange system 33 must be calculated to deliver sufficient heat for operation of the apparatus.

An example demonstrating heat transfer requirement for a single point in the expulsion process follows. As illustrated by figure 3, expelled tank fluid passes through heat exchangers 89,91 increasing its temperature to nearly that of the surface of outer shell 23 (preferably by free convection to the ambient air though various means of forced convection of ambient air to shell 23 could be utilized to provide more energy exchange). The fluid then flows to heat exchangers 85,87, respectively, cooling the fluid and dumping heat for fluid expulsion and single phase maintenance into fluid remaining in pressure vessel 27. The maximum amount of heat (Q) that can be transported from shell 23 to vessel 27 depends on the mass flow rate of outflowing fluid (m $_{supply}$), the specific heat of the cryogenic air ($C_p$), and the temperature difference between shell 23 and vessel 27 as in the following equation:

$$Q = m_{supply}C_p(T_s-T_v)$$

Since the $C_p$ of cryogenic air varies with temperature, a more accurate representation of the heat transported is:

$$Q = m_{supply}(h_s-h_v)$$

where $h_s$ is the enthalpy of air at the outer shell temperature and fluid pressure and $h_v$ is the enthalpy of air at the pressure vessel temperature and fluid pressure.

A realistic number for heat exchanger efficiency is considered to be 0.90, so that the Q calculated above would be multiplied by this efficiency twice (for external and internal heat exchangers) to obtain a heat flux for the heat exchanger described. Assuming a nominal fluid pressure of 5.53 MPa (800 psia), an ambient temperature of 294.4 K (530°R) ($h_s$ = 284 J/gm (i.e., 122 BTU/Lbm)) and pressure vessel fluid temperature of 83.3 K (150°R) ($h_v$ = -111.6 J/gm (i.e., -48 BTU/Lbm)), the total Q transferred to the pressure vessel fluid is = -111.6 J/gm (i.e., -48 BTU/Lbm)), the total Q transferred to the pressure vessel fluid is

$$Q = (0.9)(0.9)7.26kg/hr(284-(-111.6)J/gm$$
$$Q = 644.6W$$
$$(Q = (0.9)(0.9)16.0Lbm/Hr(122-(-48)BTU/Lbm$$
$$Q = 2200BTU/Hr)$$

Taking these numbers into consideration as well as the required increase in temperature of vessel 27, a double loop exchange system as shown would be required to achieve approximately 726.6 W (2480 Btu/hr) that will drive 7.26 kg/hr (16 lbm/hr) out of vessel 27 while remaining single phase.

In order to predict the amount of heat transfer between the outer shell and ambient air, a free convection correlation for a long horizontal cylinder geometry is utilized so that heat transfer by free convection, $q_{conv}$, from ambient air to shell 23 is given by:

$$q_{conv} = h\pi DL(T_S-T_\infty)$$

where h equals the average free convection film coefficient, D equals cylinder diameter, L equals cylinder length, $T_S$ equals cylinder temperature, and $T_\infty$ equals ambient air temperature. The free convection film coefficient may be obtained from the dimensionless Rayleigh number, Ra, by:

$$Ra = g\beta(T_S-T_\infty)L^3/\_v$$

where g equals acceleration of gravity, $\beta$ equals the volume coefficient of expansion, __ equals thermal diffusivity, and v equals dynamic viscosity.

In the case at hand, solution for Ra yields $1.4\times10^9$. An appropriate correlation for the Nusselt number, Nu, is:

$$Nu_D = 0.10(Ra)^{1/3}$$

which for this example is equal to approximately 110.0. The film coefficient is related to the Nusselt number by:

$$h = (Nu\ k)/L$$

where the thermal conductivity, k, for air at the average air temperature is 0.0225 W/m-K (0.013 BTU/Hr-Ft-°F). This results in an average film coefficient, h, of 5.39 W/m$^2$-K (0.95 BTU/Hr-Ft$^2$-°F).

Thus, for an outer shell area of approximately .232 m$^2$ (2.5 ft$^2$), an ambient temperature of 294.4 K (530°R) and average shell temperature of 166.7 K (300°R), the total amount of heat available from free convection will be 161.1 W (550 BTU/Hr). Therefore, a higher product of film coefficient and outer shell 23 surface area is required in order to transfer adequate heat to vessel 27 to maintain desired pressure. Since the free convection heat transfer coefficient is fixed due to geometry and fluid conditions, the only method to increase this product is to effectively increase the surface area of shell 23 as is done utilizing fins 41.

FIGURES 4 through 7, and particularly FIGURES 5 through 7 wherein a preferred arrangement is illustrated, show routing of the heat exchange loop portions as suggested hereinabove. For a 3 liter tank design, 19.2 to 19.5 m (63-64 feet) total of tubing is utilized for heat exchange system 33. Figure 8 is a Mollier chart having plotted thereon results of various tests illustrating an adequate degree of separation of the transient fluid condition from the two-phase region utilizing the apparatus of this invention.

While not illustrated herein, vessel 27 is preferably supported in shell 23 on neck tube support 83 attached to both vessel 27 and shell 23. Bumpers, or pads, would be desirable adjacent to the lower, unsupported, end of vessel 27 to thwart movement of vessel 27 in excess of maximum allowable stress to neck 83 or its connections to vessel 27 and shell 23.

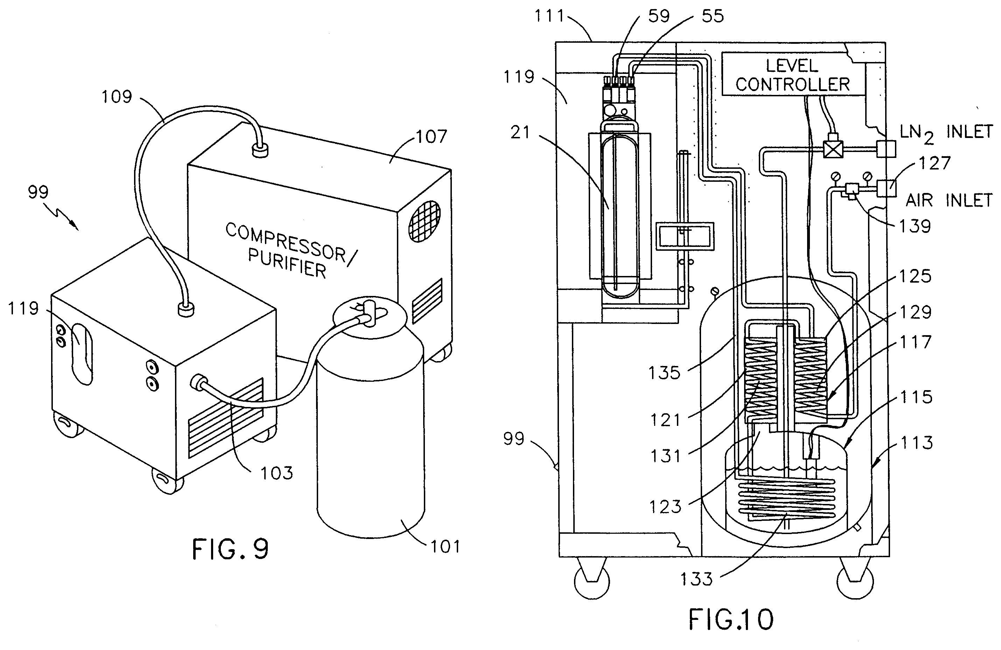

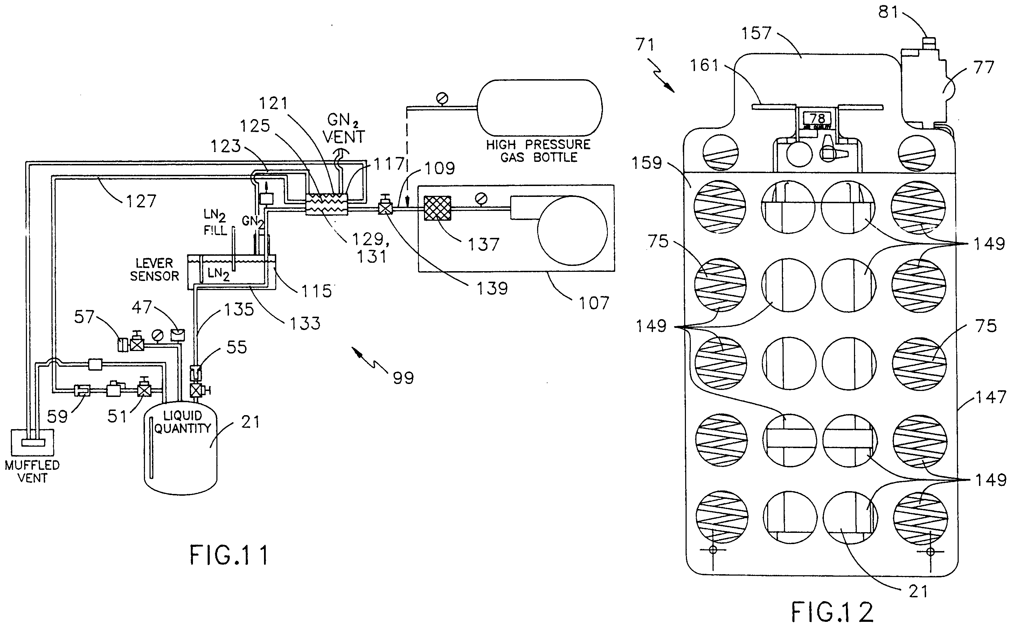

FIGURES 9 through 11 illustrate loading apparatus 99 of this invention having coolant (such as liquid nitrogen) supply 101 connected thereto by supply conduit 103 (an $LN_2$ refrigerator or other means could be utilized). Air supply 107 is connected to apparatus 99 by conduit 109 (a compressor being illustrated, though a high pressure compressed air bottle could also be utilized). An alternative fill apparatus could be provided which utilizes a source of cryogenic temperature air itself maintained at supercritical pressure, in which case, loading would be simplified even if possibly more expensive and unwieldy.

Apparatus 99 includes housing 111, vacuum chamber 113 having $LN_2$ bath chamber 115 and precooling chamber 117 therein, and storage apparatus insertion chamber 119 for receipt thereinto of a storage apparatus to be serviced (preferably having a self aligning load, securing and quick disconnect mechanism for ease of use by an operator). Precooling chamber 117 includes heat exchange chamber 121 connected with boil-off line 123 and chamber 125 connected with fill vent quick disconnect 59 from apparatus 21 to provide preliminary cooling (from about 20°C to about -60°C) of air received through inlet 127 from supply 107.

Exchange coils 129 and 131 are positioned in chambers 125 and 121, respectively, air flowing in the coils then being passed through $LN_2$ bath in coil 133 of conduit 135 (it should be recognized that mechanical refrigeration could also be utilized) to lower temperature of the air to about -195°C. The air is then received in apparatus 21 through quick disconnect 55. Since the air from supply 107 is received at loading apparatus 99 at or above the critical pressure (about 5.52 MPa (800 psi)), the fluid is received at apparatus 21 in the single phase condition, thus rendering apparatus 21 usable substantially immediately after filling.

Where supply compressor unit 107 is utilized rather than a high pressure gas bottle containing high purity air, filter/dryer/$CO_2$ scrubber 137 and pressure regulator 139 are provided. Compressor supply unit 107 may include for example, an oil-free 6.9 MPa (1,000 psi) compressor. Various gauges, readouts, program controls and the like could be utilized to enhance ease of operation and safety of the apparatus.

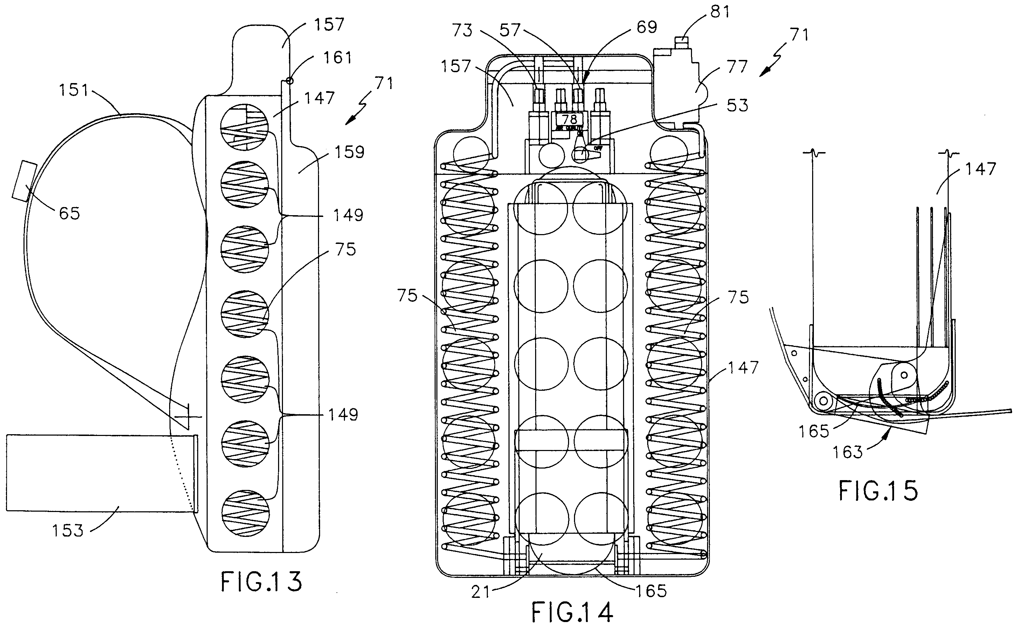

FIGURES 12 through 15 illustrate carriage and conditioning unit 71 of this invention. Unit 71 includes pack structure 147 made, for example, of high strength, light weight molded plastic. Structure 147 has a plurality of openings 149 therein to assure proper flow of ambient air around apparatus 21 and heat exchangers 75. Air conditioning heat exchangers 75 and pressure regulator 77 are mounted on structure 147 by any convenient means, and adjustable harness 151 and waist belt 153 are mounted in selected sets of receiving slots at the back of the pack structure. Remote fluid quantity readout 65 may be attached to harness 151 for ease of observation.

Apparatus 21 is snugly maintained in structure 147 by molded head 157 and hinged door 159 connected at hinge 161. Double hinged retainer 163 having arcuate retaining surface 165 corresponding to the bottom of apparatus 21 is provided for ease of loading and unloading of apparatus 21 from unit 71 and for retaining door 159.

As may be appreciated from the foregoing, a highly reliable, self contained breathing system and loading apparatus are provided wherein long storage, standby and use times may be achieved.

## Claims

1. A fluid storage and delivery apparatus comprising:

   containment means having a capacity for receiving fluid at cryogenic temperature and at or above supercritical pressure so that said fluid is, at the time of being received in said containment means, in a single phase;

   pressure regulating means connected with said containment means to enable loading of said cryogenic temperature fluid at supercritical pressure into said containment means to said capacity of said containment means;

   outlet means connected with said containment means for selective expulsion of said fluid from said containment means therethrough; and

   passive heat exchange means connected with said outlet means for receiving said expelled fluid at said outlet means and conducting said expelled fluid to a destination, said heat exchange means being routed for introducing heat into said containment means to maintain said fluid remaining in said containment means in said single phase.

2. The apparatus of claim 1 wherein said fluid is air and wherein said apparatus is made of materials so that said apparatus having air therein sufficient for a breathable air delivery time of about 60 minutes weighs less than about 9.1 kg (20 pounds).

3. The apparatus of either claim 1 or claim 2 wherein said fluid is air and wherein said containment means has a volume of 4.2 liters or less for each 60 minute supply of breathable air deliverable by the apparatus.

4. The apparatus of any of claims 1 through 3 further comprising relief means biased to ambient pressure for relieving excessive pressure in said containment means and a conduit connected with said relief means to receive fluid expelled through said relief means and to direct said expelled fluid to said destination.

5. The apparatus of any of claims 1 through 4 wherein said passive heat exchange means includes a first loop portion passing into and out of association with said containment means and a second loop portion passing into and out of association with said containment means, said loop portions for introducing said heat into said containment means at a rate determined by a rate of expulsion of said fluid from said containment means through said outlet means.

6. The apparatus of any of claims 1 through 5 further comprising:
a pack structure having said containment means mountable therein, said pack structure having a plurality of openings thereinto; and
conditioning means mounted in said pack structure adjacent to said containment means and connected with said passive heat exchange means for delivery of said fluid therethrough and for raising the temperature of said fluid to a selected end use temperature.

7. A mixed gas storage and delivery apparatus comprising:
a pressure vessel having a capacity for containing mixed gas at a temperature and at a pressure so that mixed gas in said vessel is in a single phase, said vessel having an inlet and an outlet; and
pressure regulating means connected with said pressure vessel to enable loading of mixed gas which is at a cryogenic temperature and at or above supercritical pressure into said pressure vessel to said capacity of said pressure vessel.

8. The apparatus of claim 7 further comprising:
an outer shell having said pressure vessel therein;
surface area increasing means connected to said outer shell for effectively increasing surface area of said outer shell; and
mass flow heat exchange means connected adjacent to said outer shell and with said outlet of said pressure vessel for receiving said mixed gas from said pressure vessel through said outlet and conducting said mixed gas to a destination, said heat exchange means being routed for introducing heat by free convection into said mixed gas being conducted to a destination and into said pressure vessel from said mixed gas thus routed at a rate solely determined by rate of expulsion of said mixed gas from said pressure vessel through said outlet to thereby maintain sufficient energy in said pressure vessel to expel said mixed gas therefrom.

9. The apparatus of claim 8 wherein said surface area increasing means are fins having a first portion of said heat exchange means incorporated thereinto.

10. The apparatus of claim 9 wherein a second portion of said heat exchange means is one of attached to said pressure vessel and introduced into said pressure vessel.

11. The apparatus of any of claims 8 through 10 wherein said heat exchange means is routed to deliver sufficient heat to said pressure vessel so that an overall expulsion energy of between about 81.4 and 372 J/kg (35 and 160 BTU/Lbm) is maintained in said pressure vessel.

12. A method for storing and delivering mixed gas comprising the steps of:
loading cryogenic temperature mixed gas at or above supercritical pressure into a container so that said mixed gas at time of loading is in a single phase;
selectively expelling said mixed gas from said container; and
routing said expelled mixed gas to deliver sufficient heat to said container so that mixed gas remaining in said container remains in said single phase.

13. The method of claim 12 wherein the step of routing said expelled mixed gas is calculated to deliver sufficient heat to said pressure vessel so that sufficient expulsion energy given thermodynamic characteristics of said mixed gas is maintained in said pressure vessel.

14. The method of either claim 12 or 13 further comprising the step of conditioning said expelled mixed gas to raise the temperature thereof to a selected end use temperature.

15. An apparatus for conditioning and loading cryogenic temperature fluid into a container at supercritical pressure and thus in a single phase in the container comprising:

a source of fluid at supercritical pressure;

a conduit connected with said source for conducting said fluid to the container; and

heat exchange means receiving said conduit for lowering the temperature of said fluid to cryogenic temperature.

16. The apparatus of claim 15 wherein said source is one of a high pressure gas bottle and a compressor.

17. The apparatus of either claim 15 or claim 16 wherein said heat exchange means includes at least one of a mechanical refrigerator and a liquid cryogen bath.

18. The apparatus of any of claims 15 through 17 wherein said heat exchange means includes a precooling chamber having said conduit located therethrough and being connected with a vent line leading from the container.

19. The apparatus of either claim 15 or claim 16 wherein said heat exchange means includes a liquid cryogen bath chamber having a boil-off vent, said apparatus further comprising a precooling chamber having said conduit located therethrough and being connected with said boil-off vent.

20. The apparatus of any of claims 15 through 19 further comprising a housing having said conduit and said heat exchange means therein, said housing having means to allow ready movement of said apparatus.

21. The apparatus of any of claims 15 through 20 further comprising quick disconnect structure for receiving the container to be loaded.

FIG. 1

FIG. 2

TO MASK

FIG. 3

FIG. 7

FIG. 6

FIG. 5

FIG. 4

FIG. 8

A) 100% Loading Density    B) 80% Loading Density    C) 60% Loading Density

FIG.9

FIG.10

LEVEL
CONTROLLER

LN₂ INLET

AIR INLET

COMPRESSOR/
PURIFIER

EP 0 670 452 A1

FIG.11

FIG.12

EP 0 670 452 A1

FIG.15

FIG.14

FIG.13

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | US-A-3 062 017 (BALCAR) <br> * claims; figures * <br> --- | 1,7,12 | F17C1/00 <br> F17C1/12 <br> F17C7/00 <br> F17C5/06 |
| Y | US-A-3 827 246 (MOEN) <br> * claims; figures * <br> --- | 1,7,12 | |
| A | EP-A-0 411 505 (AIR PRODUCTS AND CHEMICALS) <br> ----- | | |

TECHNICAL FIELDS
SEARCHED      (Int.Cl.6)

F17C

The present search report has been drawn up for all claims

| Place of search | Date of completion of the search | Examiner |
|---|---|---|
| THE HAGUE | 3 August 1994 | Meertens, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)